# EUROPÄISCHE PATENTSCHRIFT

(11) **EP 1 098 765 B1**
(45) Veröffentlichungstag und Bekanntmachung des Hinweises auf die Patenterteilung: **18.08.2004**
(21) Anmeldenummer: 99931208.5
(22) Anmeldetag: 29.06.1999
(51) Int. Cl.: B32B 27/34, B32B 27/32

(54) **MEHRSCHICHTIGE, COEXTRUDIERTE, WÄRMESTABILE TIEFZIEHFOLIE FÜR VERPACKUNGSANWENDUNGEN**
MULTILAYERED, COEXTRUDED, HEAT-STABLE DEEP-DRAWING FOIL FOR PACKAGING
FEUILLE A EMBOUTIR COEXTRUDEE, STABLE A LA CHALEUR ET A PLUSIEURS COUCHES, DESTINEE A ETRE UTILISEE POUR DES EMBALLAGES

(30) Priorität: 10.07.1998 DE 19830976
(43) Veröffentlichungstag der Anmeldung: 16.05.2001
(73) Patentinhaber: Wipak Walsrode GmbH & Co. KG, 29656 Walsrode (DE)
(72) Erfinder: KASCHEL, Gregor, D-29699 Bomlitz (DE)
(74) Vertreter: Kutzenberger, Helga, Dr.
(86) Internationale Anmeldenummer: PCT/EP1999/004481
(87) Internationale Veröffentlichungsnummer: WO 2000/002726

(56) Entgegenhaltungen:
- EP-A- 0 818 508
- WO-A-98/28132
- US-A- 5 491 009

## Beschreibung

Die vorliegende Erfindung betrifft eine tiefziehbare, mehrschichtige, coextrudierte, klebstoff- und EVOH-freie Folie enthaltend Polyamid, Polyolefine bzw. auf Olefinen basierende Copolymere. Diese Folie eignet sich besonders für die Verpackung von Produkten, die in tiefziehgezogenen Folien einer Temperaturbehandlung unterzogen werden. Die Folien zeichnen sich durch eine Außenschicht aus Polyamid und eine zweite Außenschicht aus Polyolefinen oder auf Olefinen bestehenden Copolymeren aus, wobei der Folienverbund auch bei Temperaturen zwischen 50°C und 150°C nicht delaminiert.

Zur Vereinfachung der Diskussion des Standes der Technik und der Erfindung werden nachfolgend die Polymere näher erläutert, die für Folien auf dem Gebiet der vorliegenden Erfindung verwendet werden, und für diese Polymere Abkürzungen zur Verwendung in der weiteren Beschreibung eingeführt. Soweit hier spezifische Polymere genannt sind, sind diese für die entsprechenden Schichten der erfindungsgemäßen Folie geeignet.

Unter Polyamid (Abkürzung "PA") versteht man im weitesten Sinne polymere Verbindungen, die durch die Säureamid-Gruppe R-NH-CO-R' miteinander verknüpft sind. Man unterscheidet zwei Gruppen von Polyamiden: Aufbau aus einem Grundstoff durch Polykondensation von ω-Aminocarbonsäuren oder Polymerisation ihrer Lactame zum Polyamid 6-Typ und solche, die aus zwei Grundstoffen, Diaminen und Dicarbonsäuren, durch Polykondensation zum Polyamid 66-Typ entstanden sind. Darüber hinaus sind noch Copolyamide üblich, die eine Kombination der genannten Polyamidtypen darstellen.

Als "PO" werden Polyolefine zusammengefaßt. Beispiele für Polyolefine sind Polyethylene niedriger Dichte (LDPE), hoher Dichte (HDPE), lineares Polyethylen geringer Dichte (LLDPE), Polypropylen (PP), Polyisobutylen, Polybutylen und alle weiteren Polymere, die aus Olefinen hergestellt sind. Desweiteren werden hier mit PO die Olefincopolymerisate bestehend aus Olefinen und anderen Monomeren zusammengefaßt, wobei in ihrer Zusammensetzung die Olefine überwiegen. Dies sind z.B. Ethylen-Copolymerisate mit ungesättigten Estern (z.B. Vinylacetat), Ethylen-Copolymerisate mit ungesättigten Carbonsäuren bzw. ihren Salzen.

Mit "PP" wird Polypropylen gekennzeichnet, unabhängig von der räumlichen Anordnung der seitenständigen Methyl-Gruppen. Mit "EPC" werden Copolymerisate des propylen mit 1 bis 10 Mol-% Ethylen bezeichnet, wobei das Ethylen statistisch verteilt im Molekül vorliegt.

Als "LPDE" wird Polyethylen niedriger Dichte bezeichnet, das im Dichtebereich von 0,86 bis 0,93 g/cm³ liegt. Die LDPE-Moleküle zeichnen sich durch einen hohen Verzweigungsgrad aus.

Als "LLDPE" werden die linearen Polyethylene niedriger Dichte bezeichnet, die neben Ethylen als Comonomere ein oder mehrere α-Olefine mit mehr als 3 C-Atomen enthalten. Als α-Olefine seien hier beispielsweise genannt Buten-1, Hexen-1, 4-Methylpenten-1 und Octen-1. Aus der Polymerisation der genannten Stoffe ergibt sich die für LLDPE typische molekulare Struktur, die durch eine lineare Hauptkette mit daran hängenden Seitenketten gekennzeichnet ist. Die Dichte variiert zwischen 0,86 bis 0,935 g/cm³. Der Schmelzflußindex MFR liegt üblicherweise zwischen 0,3 bis 8 g/10 min. In einigen Veröffentlichungen werden die linearen Ethylen-α-Olefin-Copolymerisate entsprechend ihrer Dichte unterteilt in VLDPE oder ULDPE. Da aber nach Gnauck/Fründt (Einstieg in die Kunststoffchemie, Hanser Verlag 1991, S. 58) Eigenschaften, Verarbeitung und Verwendung dieser Copolymerisate weitgehend den Ethylen-Homopolymerisaten entspricht, wird hier auf eine genauere Unterscheidung verzichtet.

Mit "HDPE" werden die linearen Polyethylene geringer Dichte bezeichnet, die nur eine geringe Verzweigung ihrer Molekülketten aufweisen. Die Dichte des HDPE kann zwischen 0,93 g/cm³ bis zu 0,97 g/cm³ liegen.

Mit "mPE" wird hier ein Ethylen-Copolymerisat bezeichnet, das mittels Metallocen-Katalysatoren polymerisiert wurde. Als Comonomer wird vorzugsweise ein α-Olefin mit vier oder mehr Kohlenstoffatomen eingesetzt. Die mit konventionellen Ziegler-Natta-Katalysatoren hergestellten Polymere enthalten häufig in den niedermolekularen Fraktionen höhere Konzentrationen der α-Olefine. Als Folge der sehr einheitlichen katalytisch wirksamen Metallocen-Zentren findet man enge Molekulargewichtsverteilungen und bei Fraktionierungen sehr einheitlichen Einbau der α-Olefine sowohl in den hoch- als auch in den niedermolekularen Fraktionen. Die Dichte liegt vorzugsweise zwischen 0,900 und 0,930 g/cm³. Die Molekulargewichtsverteilung M_{w}/Mₙ ist kleiner 3,5, vorzugsweise kleiner 3.

Mit "EAA" werden Copolymerisate bestehend aus Ethylen und Acrylsäure und mit "EMAA" Copolymerisate bestehend aus Ethylen und Methacrylsäure bezeichnet. Der Ethylengehalt liegt vorzugsweise zwischen 60 und 99 Mol-%.

Mit "I" werden auf Olefinen basierende Copolymerisate bezeichnet, dessen Moleküle über Ionenbindung vernetzt sind. Die ionischen Vernetzungen sind reversibel, dies bedingt ein Auflösen der ionischen Vernetzung bei den üblichen Verarbeitungstemperaturen (180°C bis 290°C) und eine Neubildung in der Abkühlphase. Üblicherweise werden als Polymere Copolymerisate aus Ethylen mit Acrylsäuren eingesetzt, die mit Natrium- oder Zinkionen vemetzt sind.

Mit "EVA" wird ein Copolymerisat bestehend aus Ethylen und Vinylacetat bezeichnet. Der Ethylengehalt liegt vorzugsweise zwischen 60 und 99 Mol-%.

Mit "HV" werden coextrudierbare, haftvermittelnde Polymere bezeichnet. Demgegenüber werden unter Klebstoffen nichtmetallische Werkstoffe einschließlich Polymeren verstanden, die zwei Folienschichten durch Oberflächenhaftung und innere Festigkeit verbinden können, ohne daß sich das Gefüge der verbundenen Folienschichten wesentlich ändert. Im Gegensatz zu den Haftvermittlern sind Klebstoffe nicht coextrudierbar, sondern müssen separat durch Flächenauftrag, z.B. durch Laminieren oder Flüssigauftrag, aufgebracht werden.

Haftvermittler sind bevorzugt modifizierte Polyolefine, wie z.B. LDPE, LLDPE, mPE, EVA, EAA, EMAA, PP, EPC, die mit mindestens einem Monomer aus der Gruppe der α,β-einfach ungesättigten Dicarbonsäuren, wie beispielsweise Maleinsäure, Fumarsäure, Itaconsäure oder deren Säureanhydriden, Säureestern, Säureamiden und Säureimiden, gepfropft sind. Als extrudierbare Haftvermittler können daneben Copolymerisate von Methylen mit α,β-einfach ungesättigten Dicarbonsäuren, wie Acrylsäure, Methacrylsäure und/oder deren Metallsalze mit Zink oder Natrium und/oder deren Alkyl(C₁-C₄)ester, die auch mit mindestens einem Monomer aus der Gruppe der α,β-einfach ungesättigten Dicarbonsäuren, wie beispielsweise Maleinsäure, Fumarsäure, Itaconsäure oder deren Säureanhydriden, Säureestern, Säureamiden und Säureimiden, gepfropft sein können, zum Einsatz kommen. Daneben können auch Polyolefine wie z.B. Polyethylen, Polypropylen, Ethylen/Propylen-Copolymerisate oder Ethylen/α-Olefin-Copolymerisate, die mit Copolymerisaten von Ethylen mit α,β-einfach ungesättigten Dicarbonsäuren, wie Acrylsäure, Methacrylsäure und/oder deren Metallsalzen mit Zink oder Natrium und/oder deren Alkyl(C₁-C₄)estern, gepfropft sind, zum Einsatz kommen. Besonders geeignet als Haftvermittler sind Polyolefine, insbesondere Ethylen/α-Olefin-Copolymerisate mit aufgepfropftem α,β-einfach ungesättigtem Dicarbonsäureanhydrid, insbesondere Maleinsäureanhydrid. Die HV können auch ein Ethylen/Vinylacetat-Copolymerisat, vorzugsweise mit einem Vinylacetatgehalt von wenigstens 10 Gew.-% enthalten.

Verschiedene Schichten einer Folie werden durch "/" getrennt. Mischungen von Polymeren einer Schicht werden durch runde Klammern gekennzeichnet und durch ein "+" verbunden. So beschreibt der Folienaufbau ".../LLDPE/(mPE+LDPE)" eine mehrschichtige Folie, wobei die eine Außenschicht eine Mischung aus mPE und LDPE enthält. Eine Innenschicht besteht aus LLDPE. Die restlichen Schichten der Folie werden durch "...." angedeutet.

In EP 0 490 558 wird ein Verfahren beschrieben, verpackte Lebensmittel zu Erhitzen. Die tiefziehbare Muldenfolie bestehend aus (Glykol modifiziertes Polyethylenterephthalat + Polycarbonat)/HV/EVOH/HV/LLDPE in den Dicken 200/10/15/10/100 µm wird tiefgezogen, gefüllt mit Lebensmittel und mit einer mikroperforierten Deckelfolie bestehend aus Polyamid und Polyethylen versiegelt. Die Löcher in der Deckelfolie haben einen Durchmesser von ca. 85 µm. Die Verpackung wird tiefgefroren und unmittelbar vor Gebrauch im kochenden Wasser erwärmt. Die Poren sind groß genug, um die Luft beim Kochvorgang entweichen zu lassen, und klein genug, um das Eindringen von Wasser zu verhindern. Verpackungen dieser Art sind ungeeignet, Produkte bei atmosphärischen Bedingungen zu schützen, da durch die perforierte Deckelfolie Bakterien, Hefen oder Schimmelpilze eindringen können.

In WO 94/19186 wird eine symmetrische Folie mit dem Folienaufbau Polyolefin/Haftvermittler/PA/EVOH/PA/Haftvermittler/Polyolefin geschildert. Das Polyamid ist bevorzugt ein aromatisches PA oder ein daraus abgeleitetes, welches kein Caprolactam enthält. Hervorgehoben wird die Möglichkeit, daß die außen liegenden Haftvermittler- und Polyolefinschichten von der Folie abgezogen werden können. Folien dieser Art lassen sich im Autoklaven in wäßriger Atmosphäre sterilisieren, jedoch löst sich die EVOH-Schicht an den Schnittkanten der Folie in Wasser. Dies kann zu einer Delamination der Folie zwischen den beiden PA-Schichten führen, da das EVOH durch das Wasser gelöst und entfernt wird. Je höher die Temperatur gewählt wird, desto stärker ist die Delamination zu beobachten.

In US 04 997 710 wird eine siebenschichtige Folie mit dem Aufbau PA/HV/LLDPE/HV/EVOH/HV/Siegelschicht beschrieben. Auch bei dieser Folie ist die innenliegende EVOH-Schicht an den Schnittkanten der Feuchtigkeit bei der Wärmebehandlung ausgesetzt. Dies kann wiederum zu einer Delamination der Folie führen.

In DE 19 510 136 wird eine mehrschichtige, klebstofffreie Folie mit dem Aufbau PA/HV/PA/HV/PE beschrieben. Diese Folie ist nicht coextrudiert, da die aus PE bestehende Siegelschicht extrusionsbeschichtet ist. Durch die Extrusionsbeschichtung ist die Verbundhaftung zwischen der HV-Schicht und der PE-Schicht nich so hoch, wie bei einer völlig coextrudierten Folie, bei der alle Schichten in einem Werkzeug zusammengeführt werden.

Das gleiche Herstellverfahren liegt DE 19 507 215 zugrunde. Die mehrschichtige, klebstofffreie Folie mit dem Aufbau PA/HV/PAJHV/I, die gegebenenfalls zwischen HV und I durch eine weitere HV-Schicht ergänzt werden kann, ist speziell für die Herstellung von Kochpökelware entwickelt worden. Aufgrund des Herstellverfahrens, die 1-Schicht wird extrusionsbeschichtet, neigt die Folie beim Kochen zur Delamination in der Beschichtungsebene. Beim Trennen der Folie vom Kochschinken können Folienreste auf der Schinkenoberfläche anhaften, was unerwünscht ist.

Es stellte sich daher die Aufgabe, eine Folie mit verbesserter, hoher Verbundhaftung und Siegelfestigkeit, insbesondere während einer Wärmebehandlung in wäßriger Umgebung, bereitzustellen, die außerdem tiefziehbar ist. Weiterhin ist z.B. bei der Kochschinkenherstellung, bei der entsprechende Folien als Produktionshilfsmittel eingesetzt werden, sicherzustellen, daß nach dem Auspacken des Schinkens aus der Folie keine Folienreste auf dem Schinken zurückbleiben, da Folienreste nicht zum Verzehr geeignet sind. Bei der Verpackung von Fertiggerichten, die z.B. bei 100°C im Wasserbad erwärmt werden, muß sichergestellt sein, daß die Verpackung geschlossen bleibt. Bei Folien mit niedriger Verbundhaftung und Siegelfestigkeit würde der Verpackungsinhalt ins Wasserbad auslaufen. Bei Produkten, die in der Verpackung sterilisiert werden, darf diese unter den Sterilisationsbedingungen nicht undicht werden.

Erfindungsgemäß gelang dies durch eine mehrschichtige, Schichten aus Polyamid und aus Olefinen oder Olefincopolymeren aufweisende Folie, bei der der Folienverbund zur Verbesserung der Verbundhaftung durch Coextrusion hergestellt wird und kein EVOH enthält.

Bei der erfindungsgemäßen Folie handelt es sich um eine mindestens achtschichtige, coextrudierte, klebstoff- und EVOH-freie Folie aufgebaut aus
a) einer Außenschicht 10 enthaltend ein Polyamid oder eine Mischung verschiedener Polyamide,
b) einer Außenschicht 24 enthaltend ein Polyolefin oder Olefincopolymer oder eine Mischung dieser Polymere,
c) einer Innenschicht 18 enthaltend ein Polyamid oder eine Mischung verschiedener Polyamide,
d) einer Innenschicht 14 enthaltend ein Polyolefin oder Olefincopolymer oder eine Mischung dieser Polymere,
e) einer Innenschicht 12 grenzend an die Außenschicht 10 und die Innenschicht 14, die ein haftvermittelndes Polymer enthält,
f) einer Innenschicht 16 grenzend an die Innenschichten 14 und 18, die ein haftvermittelndes Polymer enthält,
g) einer Innenschicht 20 grenzend an die Innenschichten 18 und 22, die ein haftvermittelndes Polymer enthält,
h) einer Innenschicht 22 grenzend an die Innenschicht 20 und die Außenschicht 24, die ein Polyolefin oder Olefincopolymer oder eine Mischung dieser Polymere enthält.

Der prinzipielle Aufbau der erfindungsgemäßen Folie ist in der folgenden Tabelle noch einmal schematisch dargestellt:

| Schicht | Polymer | Bemerkungen |
|---|---|---|
| 10 | Polyamid | Außenschicht |
| 12 | Haftvermittler | |
| 14 | Polyolefin/Olefincopolymer | |
| 16 | Haftvermittler | |
| 18 | Polyamid | |
| 20 | Haftvermittler | |
| 22 | Polyolefin/Olefincopolymer | |
| 24 | Polyolefin/Olefincopolymer | Außenschicht, Siegelschicht |

Die erfindungsgemäße Folie läßt sich auf allen üblichen Extrusionseinrichtungen, auf denen Polyamid oder Polyolefine verarbeitbar sind, extrudieren.

Die Außenschicht 10 und Innenschicht 18 enthalten als Polyamid bevorzugt PA6, PA11, PA12 oder PA66, auf diesen Polyamiden basierende Copolyamide oder Mischungen aus diesen Polymeren. Geeignete Copolyamide sind insbesondere PA6/66, PA6/12, PA6/6I. PA6/IPDI, PA66/610, PA6/11/66. Zur Verbesserung der Sauerstoffbarriere oder Tiefziehfähigkeit können die Polyamide oder PolyamidMischungen mit teilaromatischen PA's gemischt werden, insbesondere mit PA6I/6T, PAMXD6 oder PA61.

Die aus PA bestehenden Schichten können durch Additive modifiziert sein. Als Additive werden z.B. Kristallisationsmittel, Schmiermittel und Verarbeitungshilfsmittel betrachtet.

Weiterhin können die Polyamide durch schichtartige Partikel modifiziert sein. Die schichtartigen Partikel können aus organischen wie auch aus anorganischen Stoffen bestehen. Als charakteristischer Partikeldurchmesser wird die Sehnenlänge des Partikels verstanden, die üblicherweise unterhalb von 700 nm liegt. Durch die Zugabe dieser Partikel kann z.B. die Sauerstoffbarriere oder die Zugfestigkeit der Folie verbessert werden.

Ein weiterer Punkt ist die Durchlässigkeit von Strahlung, insbesondere von ultravioletter Strahlung (von 200 bis 380 nm). Es hat sich herausgestellt, daß einige PA-Typen bestimmte Wellenlängen des UV-Lichtes absorbieren können und somit empfindliche Produkte wie z.B. Fleisch besser schützen.

Die Außenschicht 24 enthält Polyolefine oder Olefincopolymere oder eine Mischung dieser Polymere. Bevorzugt eingesetzt werden LDPE, LLDPE, mPE, I, HDPE, PP, EPC oder Mischungen dieser Polymere. Zur Verbesserung der Gleitfähigkeit können Gleit- und Antiblockmittel zugegeben werden. Die Menge des Gleitmittels sollte je nach Schichtdicke zwischen 50 und 2000 ppm liegen, wobei mit niedrigeren Schichtdicken höhere Konzentrationen bevorzugt sind. Der Gehalt des Antiblockmittels in der Außenschicht sollte zwischen 50 und 3000 ppm, bevorzugt zwischen 100 und 2000 ppm liegen.

Die Innenschichten 12, 16 und 20 enthalten einen extrudierbaren Haftvermittler. Als solcher werden bevorzugt modifizierte Polyolefine oder Olefincopolymere eingesetzt. Die Haftvermittler erhöhen die Verbundhaftung zwischen zwei ansonsten nicht haftenden Schichten.

Die Innenschicht 14 enthält Polyolefine oder Olefincopolymere oder Mischungen dieser Polymere. Die Materialien der Innenschichten 12 und 16 sind so auf die Innenschicht 14 abgestimmt, daß die Haftung der Schichten auch bei hohen Temperaturen insbesondere bei der vorgesehenen Anwendungstemperatur gewährleistet ist.

Die Innenschicht 22 enthält Polyolefine oder Olefincopolymere oder Mischungen dieser Polymere, die so ausgewählt sind, daß die Innenschicht 22 auch bei hoher Anwendungstemperatur an der Innenschicht 20 und der Außenschicht 24 haftet. Weiterhin unterstützt sie die Siegelschicht während des Siegelvorganges.

Alle Schichten enthaltend Polyolefine oder Olefincopolymere oder Mischungen dieser Polymere werden vorzugsweise so ausgewählt, daß sie oberhalb der maximalen Anwendungstemperatur schmelzen. Als maximale Anwendungstemperatur wird die Temperatur verstanden, die maximal während der Wärmebehandlung einer aus der erfindungsgemäßen Folie hergestellten Verpackung erreicht wird. Die aus Polyamid bestehenden Schichten werden vorzugsweise so ausgewählt, daß sie bei Temperaturen von mehr als 40°C oberhalb der maximalen Anwendungstemperatur schmelzen.

Wird bei Temperaturen nahe des Siedepunktes des Wassers bei atmosphärischen Drücken gearbeitet (ca. 100°C), so sollten die auf Olefinen basierenden Schichten besonders bevorzugt aus linearen Molekülen bestehen, die einen Schmelzpunkt größer als 110°C haben. Bei Anwendungstemperaturen bis ca. 121°C werden bevorzugt lineare auf Ethylen basierende Polyolefine oder Olefincopolymere eingesetzt. Oberhalb von 121°C werden bevorzugt auf Propylen basierende Olefine bzw. Olefincopolymere eingesetzt.

Bei maximalen Anwendungstemperaturen unterhalb von ca. 80°C, so wie sie z.B. bei der Kochschinkenherstellung auftreten, enthalten die Schichten aus Polyolefinen oder Olefincopolymeren bevorzugt Ionomere, EAA, EMAA, LLDPE, EVA, mPE oder Mischungen besagter Polymere. Insbesondere die Haftung der Fleischmasse an der Folie kann durch solche polare Polymere wie z.B. Ionomere verbessert werden.

Folien mit dem erfindungsgemäßen Folienaufbau eignen sich für die Verpackung unterschiedlichster Füllgüter, ob sie ein oder mehrere feste oder flüssige Phasen oder eine Kombination der genannten Phasen darstellen. Sie eignen sich für die Verpackung von warm abgepackten Produkten. Besonders aber eignen sie sich für die Herstellung von Verpackungen für Produkte, die einer Wärmebehandlung unterzogen werden, bei der die Verpackung nicht delaminieren darf. Ganz besonders eignen sie sich für die Herstellung von Verpackungen, die bei Temperaturen von 50°C bis 150°C wärmebehandelt werden.

Folien mit dem erfindungsgemäßen Aaufbau eignen sich insbesondere für Tiefziehanwendungen. Unter Tiefziehen wird die Verformung einer Folie oder Platte verstanden, die nach Erwärmung mittels einer Luftdruckdifferenz oder eines Kolbens in eine vorgeformte Mulde gedrückt oder gezogen wird. Während des Tiefziehvorganges nimmt entsprechend des Reckverhältnisses die Foliendicke ab.

Zur Verbesserung der Gleiteigenschaften können der Folie übliche Gleit- und Antiblockmittel zugesetzt werden. Beispiele sind als Antiblockmittel bekannte feste organische oder anorganische Partikel, die aus der äußeren Oberfläche der Siegelschicht hervortreten und auf diese Weise das Gleitverhalten der Folie verbessern. Hierfür geeignet sind Siliciumoxid, Calciumcarbonat, Magnesiumsilikat, Aluminiumsilikat, Calciumphosphat, Talkum und dergleichen. Bevorzugt kommt daraus Siliciumdioxid zum Einsatz. Bekannte organische Antiblockmittel sind beispielsweise unverträgliche Polymerisate wie Polyester, Polycarbonat. Wirksame Mengen liegen im Bereich von 0,05 bis 2 Gew.-%, vorzugsweise 0,1 bis 0,8 Gew.-%. Die mittlere Teilchengröße liegt zwischen 1 und 10 µm, wobei hier Teilchen mit kugelförmiger Gestalt besonders geeignet sind. Vorzugsweise werden diese Partikel nur in einer oder beiden Außenschichten eingesetzt.

Andere Additive, die die Gleitfähigkeit der Folie, auch in Zusammenwirken mit den genannten festen Partikeln verbessern, sind die üblicherweise als Gleitmittel bezeichneten höheren aliphatischen Säureamide, höhere aliphatische Säureester, Wachse, Metallseifen sowie Polydimethylsiloxane oder andere Stoffe, wie sie bei Piringer angegeben werden (Otto Piringer: Verpackungen für Lebensmittel, VCH Verlagsgesellschaft 1993, siehe Seite 53). Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-%. Ein insbesondere für die Außenschichten geeignetes aliphatisches Säureamid ist Erucasäureamid.

Der Gesamtgehalt des Gleitmittels in der Folie sollte 1000 ppm nicht übersteigen. Bei dickeren Folien sollten geringere absolute Gleitmittelgehalte angestrebt werden, da ansonsten mit einer verstärkten Ablagerung des Gleitmittels an der Folienoberfläche zu rechnen ist. Im Extremfall können sich optisch auffällige Flecken bestehend aus Gleitmittel auf der Folie zeigen.

Die erfindungsgemäße Folie kann in einer oder mehreren Schichten eingefärbt sein.

Die erfindungsgemäße Folie kann weitere übliche Additive wie Antifogmittel oder Antistatika in üblichen Mengen enthalten. Bekannte Antistatika sind nach Domininghaus (Die Kunststoffe und ihre Eigenschaften, VDI-Verlag, Düsseldorf 1992, S. 23) bei den sogenannten inneren Antistatika ethoxylierte tertiäre Amine von Fettsäuren oder ethoxylierte Glykolester von Fettsäuren oder aber bei den äußeren Antistatika quaternäre Ammoniumsalze von Fettsäuren. Als Antifogmittel, oder auch als Antibeschlagmittel, werden die grenzflächenaktiven Stoffe bezeichnet, die das Beschlagen der Folienoberfläche mit feinen Wassertropfen verhindern. Bekannte Antifogmittel sind z.B. Glycerolfettsäureester oder Polyoxyethylensorbitanmonooleat.

Die Außenschicht 24 kann als Peelschicht ausgeführt sein. Ein bekanntes Verfahren zur Erreichung des Peeleffektes ist die Zugabe von Polybutylen in Polyethylenen oder ethylenischen Copolymeren (Ahlhaus: Verpacken mit Kunststoffen, Carl Hanser Verlaug 1997, S. 239).

Die Gesamtdicke der Folie sollte vorzugsweise maximal 400 µm betragen, besonders bevorzugt kleiner 250 µm sein. Die Schichtdicke des Polyamides bezogen auf die Gesamtdicke der Folie sollte bevorzugt 40 % nicht übersteigen. Das Verhältnis der Polyamidschichten (Außenschicht 10 zur Innenschicht 18) ist über einen weiten Bereich frei wählbar. Die Summe der Schichtdicken als Haftvermittler, bezogen auf die Gesamtdicke der Folie, sollte bevorzugt kleiner als 30 %, besonders bevorzugt kleiner als 20 %, sein. Das Verhältnis der Innenschichtdicke 14 bezogen auf die Gesamtdicke der Folie sollte bevorzugt zwischen 5 % und 30 % liegen.

Mögliche Folieaufbauten gemäß der Erfindung zeigt folgende Zusammenstellung, die eine schematische Übersicht darstellt und daher nicht vollständig ist. Die in beispielhaften Aufbauten genannten Polymere können innerhalb des Folienaufbaues unterschiedlich sein, sie müssen nicht die gleiche polymere Zusammensetzung aufweisen. So können zum Beispiel im Aufbau Nr. 1 die PA-Typen unterschiedlich sein, dies trifft auch für die HV- und auf Olefinen basierenden Schichten zu.

| Nr. | Aufbau |
|---|---|
| 1 | PA/HV/LDPE/HV/PA/HV/LDPE/EVA |
| 2 | PA/HV/LDPE/HV/PA/HV/EVA/EAA |
| 3 | PA/HV/EVA/HV/PA/HV/EMAA/I |
| 4 | PA/HV/LLDPE/HV/PA/HV/LLDPE/LLDPE |
| 5 | PA/HV/mPE/HV/PA/HV/EVA/EVA |
| 6 | PA/HV/LLDPE/HV/PA/HV/mPE/HDPE |
| 7 | PA/HV/EPC/HV/PA/HV/EPC/PP |
| 8 | PA/HV/PP/HV/PA/HV/EPC/EPC |

### Bestimmung des Schmelzpunktes von Kunststoffolien mit dem Schmelztischmikroskop

Das Prüfverfahren dient der Bestimmung des Schmelzpunktes einer Schicht in einer Kunststoffolie. Unter dem Schmelzpunkt wird die Temperatur verstanden, bei der das Kristallgitter unter atmosphärischem Druck zerfällt. Die zu messende Probe (ein Mikrotomschnitt der Folie) wird auf einem Heiztisch erwärmt und damit mit einem Mikroskop im polarisierten Durchlicht beobachtet. Besteht eine Schicht der Folie aus einem teilkristallinen, doppelbrechenden Kunststoff, verliert sie diese Eigenschaft im Moment des Schmelzens, was im polarisierten Licht mit Anordnung der Probe zwischen gekreuzt eingestellten Polarisationsfiltem beobachtet werden kann. Falls die Folienschicht eine zu schwache oder keine Doppelbrechung aufweist, kann bei unpolarisiertem Durchlicht beobachtet werden, in welchem Temperaturbereich ein Aufschmelzen auf dem Objektträger stattfindet. In den meisten Fällen kann die Schmelztemperatur mit einer Genauigkeit von +/-1 °C angegeben werden.

Die Angabe von Schmelzflußraten (MFR) bezieht sich im folgenden auf den nach DIN ISO 1133 bestimmten Wert. Erfolgen keine weiteren Angaben, wird als Meßbedingung in Form der Temperatur sowie der Auflagemasse Bedingung D in DIN ISO 1133 mit einer Temperatur von 190°C und einer Auflagemasse von 2,16 kg vorausgesetzt.

Die Dichte der Rohstoffe bezieht sich auf die Meßmethode entsprechend ISO 1183 (A).

Alle eingesetzten Rohstoffe sind kommerziell erhältlich.

Die Schmelzpunkte der Polyamid-haltigen Schichten liegen in allen Beispielen und Vergleichsbeispielen oberhalb von 170°C.

### Beispiel 1

Eine mehrschichtige Blasfolie mit dem Aufbau (80 % PA-1 + 20 % PA6/12)/HV-1/LLDPE-1/HV-1/(80 % PA-1 + 20 % PA6/12)/1-1/EAA/I-2 wird durch Coextrusion in den Schichtdicken 47/14/42/13/39/24/30/22 µm hergestellt. Der Haftvermittler HV-1 ist in allen Schichten gleich und basiert auf LLDPE gepfropft mit Maleinsäureanhydrid, wobei der MFR bei 21 g/10 min liegt und die Dichte bei 914 kg/m³. Der Schmelzpunkt der haftvermittelnden Schicht HV-1 liegt bei 122°C. Das PA-1 ist PA6 mit der Dichte von 1130 kg/m³ und einer relativen Lösungsviskosität von 4 in m-Kresol (c= 10 g/l). Das Copolyamid PA6/12 enthält 40 % Laurinlactam, die Dichte beträgt 1050 kg/m³ und der MVI (gemessen nach ISO 1033 bei 190°C/5 kg) ca. 25 ml/10 min. Das LLDPE-1 ist ein lineares PE der Dichte 911 kg/m³ und hat einen MFR von 0,9 g/10 min, der Schmelzpunkt liegt bei 118°C; das Comonomer ist Buten-1. Das I-1 ist ein Ionomer der Dichte von 940 kg/m³ und einen MFR von 4 g/10 min; es ist ein Copolymerisat aus Ethylen mit ca. 10 % Methacrylsäure und 4 % Butylacrylat, teilweise neutralisiert mit Zink. Das I-2 ist ein Ionomer der Dichte von 940 kg/m³ und einem MFR von 1 g/10 min; es ist ein Copolymerisata aus Ethylen mit ca. 14 % Methacrylsäure, teilweise neutralisiert mit Zink. Das EAA enthält ca. 9,5 % Acrylsäure, die Dichte liegt bei 938 kg/m³, der MFR bei 1,5 g/10 min. Der Schmelzpunkt des I-1 liegt bei 87°C, des EAA bei 98°C und des I-2 bei 94°C.

### Vergleichsbeispiel 2

Eine mehrschichtige, klebstoffreie Folie wird mit dem Aufbau (85 % PA-2 + 15 % PA6I/6T)/HV-3/(85% PA-2 + 15 % PA6I/6T)/HV-3/EMAA/I-3 in den Schichtdicken 40/10/40/10/75/25 Um hergestellt, wobei die Schichten EMAA/1-3 auf den bereits vorher gefertigten Verbund beschichtet werden. Das PA-2 ist PA6 der Dichte 1140 kg/m³ mit der relativen Lösungsviskosität von 3,8 gemessen in m-Kresol (c= 10 g/l). Das amorphe PA6I/6T entspricht dem im Beispiel 1 genannten. Der Haftvermittler HV-3 enthält LLDPE gepfropft mit Maleinsäureanhydrid; der MFR beträgt 4 g/10 min, die Dichte liegt bei 910 kg/m³, der Schmelzpunkt liegt bei 124°C. Das EMAA ist ein Copolymerisat aus Ethylen mit ca. 6 % Methacrylsäure, der MFR beträgt 9 g/1 0 min, die Dichte beträgt 930 kg/m³. Die Außenschicht besteht aus einem Ionomer I-3, welches mit ca. 15 Gew.-% Methacrylsäure copolymerisiert und mit Zink-Ionen teilweise neutralisiert wurde. Die Dichte des I-3 beträgt 940 kg/m³, der MFR ca. 4,5 g/10 min. Der Schmelzpunkt der HV-3 Schicht liegt bei 120°C, der EMAA Schicht bei 103°C und der I-3 Schicht bei 93°C.

Beide Folien wurden auf einer Tiefziehmaschine (Fa. Multivac) erwärmt und anschließend tiefgezogen. Die ausgeformten Mulden werden mit Kochschinkenmasse gefüllt, mit einer Deckelfolie versiegelt und anschließend in einer der Verpackungsgeometrie angepaßten Form über 2 Stunden bei 75°C in wäßriger Umgebung gekocht. Nach dem Kochen werden die Verpackungen abgekühlt und anschließend wird die Folie abgezogen. Bei der Folie aus Beispiel 1 trat in keinem Fall eine Delamination auf, bei der Folie aus Vergleichsbeispiel 2 bleiben in mehr als 5 % aller Fälle Folienreste, die durch Delamination der Folie während des Kochprozesses zu begründen sind, auf dem Fleisch zurück. Die so ermittelten Ergebnisse wurden in weiteren, vergleichbaren Tests zur Kochschinkenherstellung mit unterschiedlichen Kochbedingungen bestätigt.

### Beispiel 3

Eine mehrschichtige Blasfolie mit dem Aufbau (95 % PA-1 + 5 % PA6I/6T)/HV-1/LLDPE-3/HV-1/PA-1/HV-1/LLDPE-3/(66% LLDPE-2 + 34 % LLDPE-3) wird durch Coextrusion in den Schichtdicken 25/7/19/7/15/7/12/18 µm hergestellt. Der Haftvermittler HV-1 und das Polyamid PA-1 entsprechen denen aus Beispiel 1. Das Copolyamid PA6I/6T entspricht dem aus Vergleichsbeispiel 2. Das LLDPE-3 ist ein lineares PE der Dichte 920 kg/m³ und hat einen MFR von 1 g/10 min, der Schmelzpunkt liegt bei 124°C; das Comonomer ist Octen-1. Das LLDPE-2 ist ein lineares PE der Dichte 940 kg/m³ und hat einen MFR von 1 g/10 min, der Schmelzpunkt liegt bei 125°C; das Comonomer ist Octen-1.

### Vergleichsbeispiel 4

Eine mehrschichtige, klebstofffreie Folie wird mit dem Aufbau PA-2/HV-3/(85 % PA-2 + 15 % PA6I/6T)/HV-3(80% LLDPE-4 + 20 % LDPE) in den Schichtdicken 35/10/35/10/55 µm hergestellt, wobei die Schicht (80 % LLDPE-4 + 20 % LDPE) auf den bereits vorher gefertigten Verbund beschichtet wird. Das PA-2, das amorphe PA6I/6T und der Haftvermittler HV-3 entsprechen dem im Vergleichsbeispiel 2 genannten. Das LLDPE-4 enthält Ethylen und Octen-1, der MFR beträgt 4 g/1 0 min und die Dichte 940 kg/m³. Das LDPE hat eine Dichte von 924 kg/m³ und einen MFR von 3,8 g/10 min. Der Schmelzpunkt der Siegelschicht beträgt ca. 121°C.

Es wurden jeweils drei Muster aus dem Beispiel 3 und Vergleichsbeispiel 4 in DIN A4 Größe ausgeschnitten, quer gefaltet und alle vier Seiten versiegelt, wobei eine kleine Öffnung zum Befüllen mit Wasser ohne Versiegelung blieb. Durch die Öffnung wurde Wasser eingefüllt und anschließend versiegelt. Der im Beutel verbleibende Luftraum betrug weniger als 20 % bezogen auf den gesamten Beutelinhalt. Anschließend wurden die Beutel im siedenden Wasser für 45 min gekocht. Aus den Beuteln der beispielhaften Folie 3 war kein Wasser ausgelaufen, aus den Beuteln des Vergleichsmusters 4 war Wasser ausgelaufen.

Die Beispiele belegen, daß die erfindungsgemäßen Folien den hohen Anwendungstemperaturen besser Stand halten, als die Vergleichsbeispiele, die den Stand der Technik wiederspiegeln.

## Patentansprüche

1. Achtschichtige, coextrudierte, klebstoff- und EVOH-freie Folie aufgebaut aus
a) einer Außenschicht 10 enthaltend ein Polyamid oder eine Mischung verschiedener Polyamide,
b) eine Außenschicht 24 enthaltend ein Polyolefin oder Olefincopolymer oder eine Mischung dieser Polymere,
c) eine Innenschicht 18 enthaltend ein Polyamid oder eine Mischung verschiedener Polyamide,
d) eine Innenschicht 14 enthaltend ein Polyolefin oder Olefincopolymer oder eine Mischung dieser Polymere,
e) eine Innenschicht 12 grenzend an die Außenschicht 10 und die Innenschicht 14, die ein haftvermittelndes Polymer enthält,
f) eine Innenschicht 16 grenzend an die Innenschichten 14 und 18, die ein haftvermittelndes Polymer enthält,
g) eine Innenschicht 20 grenzend an die Innenschichten 18 und 22, die ein haftvermittelndes Polymer enthält,
h) eine Innenschicht 22 grenzend an die Innenschicht 20 und die Außenschicht 24, die ein Polyolefin oder Olefincopolymer oder einer Mischung dieser Polymere enthält.

2. Folie nach Anspruch 1, **dadurch gekennzeichnet, dass** die Folie tiefziehbar ist.

3. Folie nach einem der Ansprüche 1 oder 2, **dadurch gekennzeichnet, daß** die Außenschicht 10 und die Innenschicht 18 als Polyamid PA6, PA11, PA12 oder PA66, auf diesen Polyamiden basierende Copolyamide, insbesondere PA6/66, PA6/12, PA6/6I, PA6/IPDI, PA66/610, PA6/11/66, oder Mischungen aus diesen Polymeren enthalten.

4. Folie nach einem der Ansprüche 1 bis 3, **dadurch gekennzeichnet, daß** die Außenschicht 10 und die Innenschicht 18 Mischungen von Polyamiden mit einem Anteil an teilaromatischen Polyamiden, insbesondere PA6I/6T, PAMXD6 oder PA6I enthalten.

5. Folie nach einem der Ansprüche 1 bis 4, **dadurch gekennzeichnet, daß** die Außenschicht 24 Polyolefine oder Olefinpolymere oder eine Mischung dieser Polymere, vorzugsweise Polyethylen niedriger Dichte (LDPE), lineares Polyethylen niedriger Dichte (LLDPE), metallocen Ethylen-Copolymerisat (mPE), auf Olefinen basierende Copolymerisat mit reversibler ionischer Vernetzung (I), lineares Polyethylen hoher Dichte (HDPE), Polypropylen (PP), Copolymerisat aus Propylen mit 1-10 Mol% Ethylen (EPC) oder Mischungen dieser Polymere enthält.

6. Folie nach einem der Ansprüche 1 bis 5, **dadurch gekennzeichnet, daß** die Innenschichten 12, 16 und 20 als haftvermittelndes Polymer modifizierte Polyolefine oder Olefincopolymere enthalten, wobei diese in jeder der genannten Schichten gleich oder unterschiedlich sein können.

7. Folie gemäß einem der Ansprüche 1 bis 6, **dadurch gekennzeichnet, daß** die Gesamtdicke der Folie maximal 400 µm, bevorzugt weniger als 250 µm beträgt.

8. Folie gemäß einem der Ansprüche 1 bis 7, **dadurch gekennzeichnet, daß** die Summe der Schichtdicken der haftvermittelnden Polymere enthaltenden Innenschichten 12, 16 und 20 weniger als 30 %, bevorzugt weniger als 20 % der Gesamtschichtdicke der Folie beträgt.

9. Verpackung, hergestellt aus einer Folie nach einem der Ansprüche 1 bis 8.

10. Durch Tiefziehen hergestellte Verpackung nach Anspruch 9.

## Claims

1. Eight-layer, coextruded, adhesive- and EVOH-free film composed of
a) an outer layer 10 comprising a polyamide or a mixture of various polyamides,
b) an outer layer 24 comprising a polyolefin or olefin copolymer or a mixture of these polymers,
c) an inner layer 18 comprising a polyamide or a mixture of various polyamides,
d) an inner layer 14 comprising a polyolefin or olefin copolymer or a mixture of these polymers,
e) an inner layer 12 adjoining the outer layer 10 and the inner layer 14, which comprises an adhesion-promoting polymer,
f) an inner layer 16 adjoining the inner layers 14 and 18, which comprises an adhesion-promoting polymer,
g) an inner layer 20 adjoining the inner layers 18 and 22, which. comprises an adhesion-promoting polymer,
h) an inner layer 22 adjoining the inner layer 20 and the outer layer 24, which comprises a polyolefin or olefin copolymer or a mixture of these polymers.

2. Film according to Claim 1, **characterized in that** the film is thermoformable.

3. Film according to Claim 1 or 2, **characterized in that** the outer layer 10 and the inner layer 18 comprise, as polyamide, PA6; PA11, PA12 or PA66, copolyamides based on these polyamides., in particular PA6/66, PA6/12, PA6/6I, PA6/IPDI, PA66/610; PA6/11/66, or mixtures composed of these polymers.

4. Film according to any one of Claims 1 to 3, **characterized in that** the outer layer 10 and the inner layer 18 comprise mixtures of polyamides with a proportion of semiaromatic polyamides, in particular PA6I/6T, PAMXD6 or PA6I.

5. Film according to any one of Claims 1 to 4, **characterized in that** the outer layer 24 comprises polyolefins or olefin polymers or a mixture of these polymers, preferably low-density polyethylene (LDPE), linear low-density polyethylene (LLDPE), metallocene ethylene copolymer (mPE), copolymer based on olefins and having reversible ionic crosslinking (I), linear high-density polyethylene (HDPE), polypropylene, (PP), copolymer composed of propylene with from 1 to 10 mol% of ethylene (EPC) or mixtures of these polymers.

6. Film according to any one of Claims 1 to 5, **characterized in that** the inner layers 12, 16 and 20 comprise, as adhesion-promoting polymer, modified polyolefins or olefin copolymers, which may be identical or different in each of the layers mentioned.

7. Film according to any one of Claims 1 to 6, **characterized in that** the total thickness of the film is at most 400 µm, preferably less than 250 µm.

8. Film according to any one of Claims 1 to 7, **characterized in that** the sum of the layer thicknesses of the inner layers 12, 16 and 20 comprising adhesion-promoting polymers is less than 30%, preferably less than 20%, of the total layer thickness of the film.

9. Packaging produced from a film according to any one of Claims 1 to 8.

10. Packaging according to Claim 9, produced by thermoforming.

## Revendications

1. Feuille co-extrudée, à huit couches, exempte d'adhésif et de EVOH, constituée
a) d'une couche externe 10 contenant un polyamide ou un mélange de divers polyamides,
b) d'une couche externe 24 contenant une polyoléfine ou un copolymère d'oléfines ou un mélange de ces polymères,
c) d'une couche interne 18 contenant un polyamide ou un mélange de divers polyamides,
d) d'une couche interne 14 contenant une polyoléfine ou un copolymère d'oléfines ou un mélange de ces polymères,
e) d'une couche interne 12, limitrophe de la couche externe 10 et de la couche interne 14, qui contient un polymère favorisant l'adhésion,
f) d'une couche interne 16, limitrophe des couches internes 14 et 18, qui contient un polymère favorisant l'adhésion,
g) d'une couche interne 20, limitrophe des couches internes 18 et 22, qui contient un polymère favorisant l'adhésion,
h) d'une couche interne 22, limitrophe de la couche interne 20 et de la couche externe 24, qui contient une polyoléfine ou un copolymère d'oléfines ou un mélange de ces polymères.

2. Feuille selon la revendication 1, **caractérisée en ce que** la feuille est capable de subir un emboutissage profond.

3. Feuille selon l'une des revendications 1 ou 2, **caractérisée en ce que** la couche externe 10 et la couche interne 18 contiennent, en tant que polyamides, les produits polyamides PA6, PA11, PA12 ou PA66, des copolyamides à base de ces polyamides, en particulier les polyamides PA6/66, PA6/12, PA6/6I, PA6/IPDI, PA66/610, PA6/11/66 ou des mélanges de ces polymères.

4. Feuille selon l'une quelconque des revendications 1 à 3, **caractérisée en ce que** la couche externe 10 et la couche interne 18 contiennent des mélanges de polyamides avec une proportion en polyamides partiellement aromatiques, en particulier les polyamides PA6I/6T, PAMXD6 ou PAGI.

5. Feuille selon l'une quelconque des revendications 1 à 4, **caractérisée en ce que** la couche externe 24 contient des polyoléfines ou des polymères d'oléfines ou un mélange de ces polymères, de préférence, du polyéthylène de basse densité (LDPE), du polyéthylène linéaire de basse densité (LLDPE), du copolymère d'éthylène métallocène (mPE), un copolymérisat à base d'oléfines à réticulation ionique réversible (I), du polyéthylène linéaire de densité élevée (HDPE), du polypropylène (PP), le copolymérisat de propylène avec 1-10 % en moles d'éthylène (EPC) ou des mélanges de ces polymères.

6. Feuille selon l'une quelconque des revendications 1 à 5, **caractérisée en ce que** les couches internes 12, 16 et 20 contiennent, en tant que polymère favorisant l'adhésion, des polyoléfines modifiées ou des copolymères modifiés d'oléfines, celles-ci ou ceux-ci pouvant être, dans chacune des couches citées, identiques ou différents.

7. Feuille selon l'une quelconque des revendications 1 à 6, **caractérisée en ce que** l'épaisseur totale de la feuille est au maximum de 400 µm, de préférence, de moins de 250 µm.

8. Feuille selon l'une quelconque des revendications 1 à 7, **caractérisée en ce que** la somme des épaisseurs de couche des couches internes 12, 16 et 20 contenant les polymères favorisant l'adhésion est de moins de 30 %, de préférence, de moins de 20 % de l'épaisseur de couche totale de la feuille.

9. Emballage, fabriqué à partir d'une feuille selon l'une quelconque des revendications 1 à 8.

10. Emballage fabriqué par emboutissage profond, selon la revendication 9.
